# EUROPEAN PATENT APPLICATION

(11) **EP 0 969 228 A2**
(43) Date of publication of application: **05.01.2000**
(21) Application number: 99305111.9
(22) Date of filing: 29.06.1999
(51) Int. Cl.: F16H 25/22

(54) **Ballscrew**

(30) Priority: 30.06.1998 GB 9814164
(71) Applicant: Thomson IBL Company, Barnstaple, North Devon EX32 8TH (GB)
(72) Inventor: Walton, Dennis Frederick, Barnstaple, North Devon EX33 4BA (GB)
(74) Representative: Crouch, David John

(57) **Abstract**

A ballscrew (10) having a ball cage (26) interposed between the ball nut (12) and the screw shaft (18).

## Description

The present invention relates to a ballscrew.

In previously proposed constructions of ballscrew, a ball nut with an internal helical groove surrounds a screw shaft, around which is formed an external helical groove, these grooves being of the same pitch so that, when the ballscrew is assembled, the two grooves define a cavity which is helical in shape and has a generally circular cross-section. Ball bearings having a diameter just slightly less than the cross-section of the helical cavity fill the latter at a certain section or sections along the ballscrew. As the ball nut and screw shaft rotate relative to one another about their common axis, the balls roll within the helical cavity against the ball nut and the screw shaft so that the ballscrew can act as a rotary bearing, the nut and shaft moving axially relative to one another as a result of their relative rotary motion.

One problem encountered with such a construction is the possibility that adjacent balls may contact one another during operation of the ballscrew and cause wear to the bearing.

The present invention seeks to provide a remedy.

Accordingly, the present invention is directed to a ballscrew having a ball cage interposed between the ball nut and the screw shaft.

Preferably, the ball cage is cylindrical. Slots may be formed in it extending in an axial direction to accommodate the balls.

Advantageously, the width of each slot is slightly less than the diameter of each ball and the cross-sectional diameter of the ball cage is such that more than half of each ball projects outwardly of the cage to facilitate recirculation of the balls. This provides the further advantage that assembly and dismantling of the ballscrew is facilitated by virtue of the fact that balls can be retained between the ball nut and the cage even when the screw shaft is absent to facilitate assembly and dismantling.

In a ballscrew in which recirculation is not necessary and no provision is made for such recirculation, by virtue of the fact that the number of relative turns between the ball nut and the screw shaft in one sense from a given normal setting does not exceed a predetermined limit, a spring may be secured between the ball cage and the screw shaft, or between the ball cage and the ball nut, to urge the ball cage into a normal position. This reduces the extent to which the balls are free to migrate from a normal position along the screw shaft.

Examples of a ballscrew made in accordance with the present invention are shown in the accompanying diagrammatic drawings, in which:
- Figure 1: shows a part-axial-sectional view of part of such a ball screw;
- Figure 2: shows a side view of part of the ballscrew shown in Figure 1;
- Figure 3: shows a cross-sectional view of the part shown in Figure 2, in the plane indicated by line III-III therein;
- Figure 4: shows a cross-section through further parts of the ballscrew shown in Figure 1;
- Figure 5: shows a portion of the part shown in Figure 3 on a larger scale;
- Figure 6: shows further parts of the ballscrew shown in Figure 1; and
- Figure 7: shows a modification of the ballscrew shown in Figure 1.

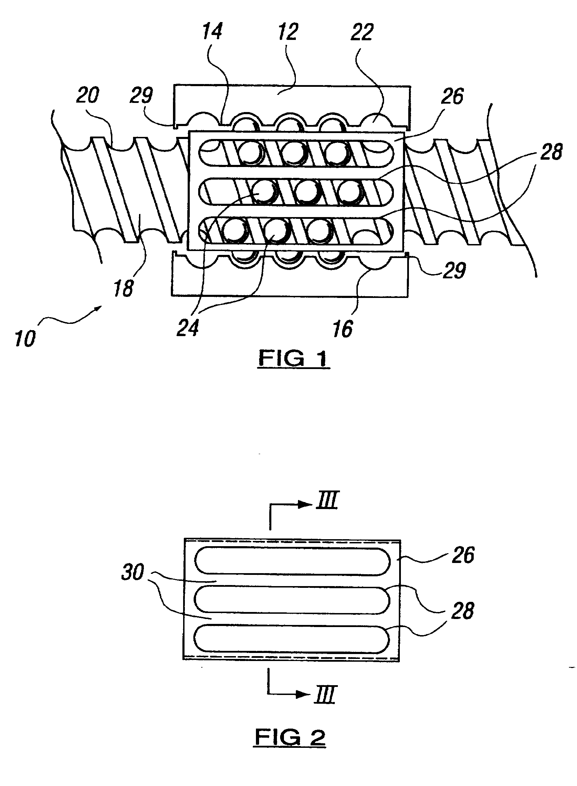

The ballscrew 10 shown in Figure 1 comprises a ball nut 12 made of a hollow cylinder of metal or synthetic plastics material and having a generally cylindrical inner surface 14 on which is formed an internal helical groove 16. A screw shaft 18 extends through the ball nut 12 coaxially therewith, and is formed with an internal helical groove 20 having the same pitch as the groove 16 of the ball nut 12. The grooves 16 and 20 thereby define a helical cavity 22 between the ball nut 12 and the screw shaft 18, which is generally circular in cross-section. A multiplicity of balls 234 are uniformed spaced apart within this helical cavity 22. The balls 24 may be metal ball bearings or they may be made of a synthetic plastics material. Their diameter is very slightly smaller than the diameter of the cross-section of the cavity 22, allowing only for very small tolerances. Large forces relative to the ball nut 12 and the ball screw 18 may be sustained whilst maintaining a low friction against relative rotation between the ball nut 12 and the screw shaft 18. Furthermore, relative rotation between these parts will result in relative axial movement therebetween.

A cylindrical machined metal or synthetic plastics integrally moulded ball cage 26 is interposed between the ball nut 12 and the screw shaft 18 so as to be coaxial therewith. It is provided with elongate slots 28 extending in an axial direction and having a width which is slightly less than the diameter of each ball 24, so that more than half of each ball is outside the cage 26.

The ball cage 26 may be retained in the ball nut 12 by means of inwardly directed lips 29 at each end of the nut 12. One of the lips 29 may be removable for assembly and dismantling of the ballscrew.

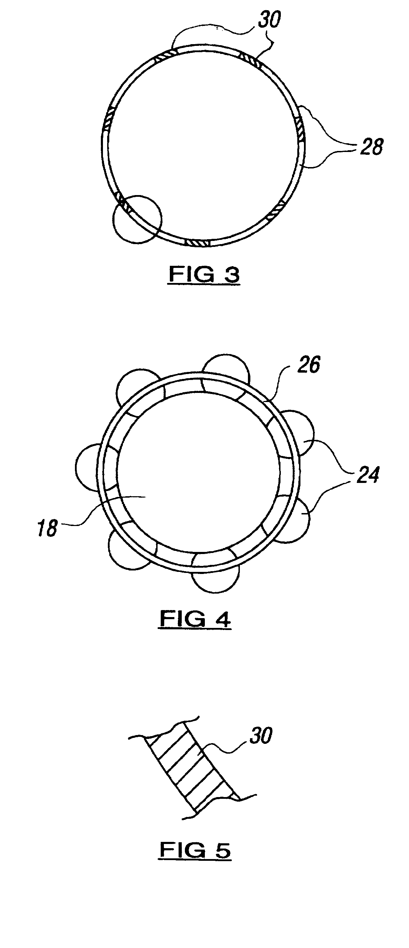

The cage 26 is shown on its own in Figures 2 and 3.

The strips 30 of cage material between the slots 28 therefore act as spacers between the balls 24, and prevent the latter contacting one another whilst rolling around the screw shaft 18.

Figure 5 shows an internal edge of one of the slots 28. This is seen to be arcuate, so that it corresponds to the surface of each ball 24. However, this arcuate edge of each strip 30 is uniform along the length of the strip to enable the balls to shift along the associated slot 28 as it progresses along the screw shaft 18, in an axial direction equal to at least one, and in this case four turns of the helical cavity 22. Thus, if for example the screw shaft 18 rotates within the ball nut 12, the angular velocity of the balls 24 and the cage 26 will be generally half the angular velocity of the screw shaft 18 by virtue of the rolling motion of the balls 24 against the ball nut 12 and the screw shaft 18.

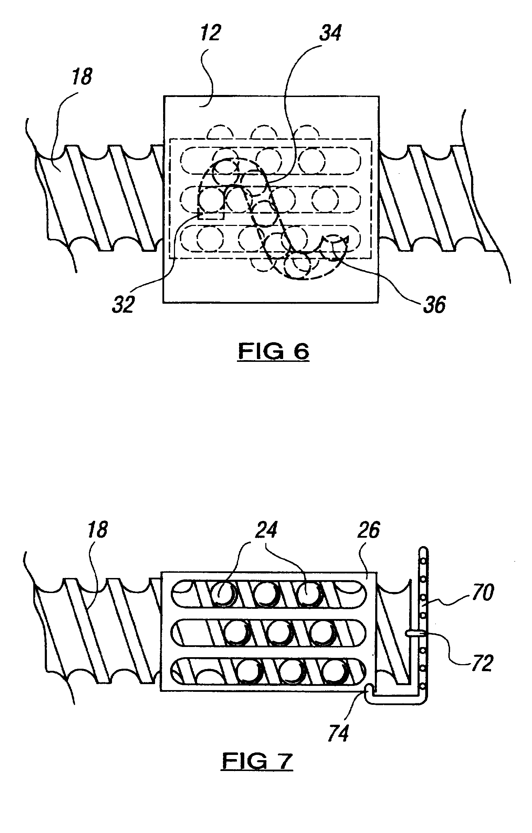

Figure 6 shows means for recirculating the balls 24, for example to enable the ball nut 12 to progress along the screw shaft 18 at a distance which is substantially greater than the axial extent of the ball nut. The parts concerned are shown in ghosted form since they overlap one another. Thus, a scoop 32 on the internal surface of the ball nut 12 is positioned in the path of the balls 24 so that when each ball 24 reaches the scoop 32, it is lifted out of the groove 20 and the relevant slot 28 up into a recirculating passageway 34 within the ball nut 12. The ball which has just been lifted in this way is then urged further into the passageway 34 by the next ball arriving into the scoop 32 as the screw shaft rotates relative to the ball nut 12. In this way, a series of balls 24 progresses through the passageway 34 to exit at a chute 36 thereof. Balls 24 exiting the passageway 34 at the chute 36 are deposited in the groove 20 as each slot 28 passes underneath the shoot 36. In this way, the balls may be recirculated indefinitely in a given direction.

In the event that the screw shaft 18 changes direction, the chute 36 becomes the scoop and the scoop 32 becomes the chute. Whilst the recirculation passageway 34 is shown as an S-shape, it could clearly be any shape, and may for example be helical following the material of the ball nut 12 around the ball screw 18 at an angle of 45° to the ballscrew axis.

In the modification shown in Figure 7, recirculation of the balls is not necessary because this construction is designed for applications where the screw shaft 18 never rotates relative to the ball nut 12 more than a few times in a given sense of rotation. In such applications hitherto, it has been found that the balls can drift from their intended central position on the screw shaft 18.

To obviate this disadvantage, a spiral spring 70 has one end 72 secured to the centre of one end of the shaft 18 and another end 74 secured to one end of the ball cage 26. As a result the combination of the spring 70 acting on the cage 26 and the latter acting on the balls 24 will urge the balls towards their central position, and reduce the likelihood that they will drift to one end or the other of the screw shaft 18 when the ballscrew is in its normal rest position. Clearly, the spring could be attached to the ball nut 12 instead of the screw shaft 18.

It will be appreciated that the length of each slot 28 at the cage 26 is half the maximum possible axial displacement of the balls along the screw shaft.

Since there is no recirculating device, the cage 26 and slots 28 may be so dimensioned that more than half of each ball is on the inside of the cage 26, in which case it would be possible for the balls 24 to be retained on the screw shaft 18 even in the absence of the ball nut 12, to facilitate assembly and dismantling of the ballscrew.

## Claims

1. A ballscrew (10) **characterised by** a ball cage (26) interposed between the ball nut (12) and the screw shaft (18).

2. A ballscrew (10) according to claim 1, **characterised in that** the ball cage (26) is cylindrical.

3. A ballscrew according to claim 1, **characterised in that** slots (28) are formed in the ball cage (26) extending in an axial direction to accommodate the balls (24).

4. A ballscrew (10) according to claim 3, **characterised in that** the width of each slot (28) is less than the diameter of each ball (24) and the cross-sectional diameter of the ball cage (26) is such that more than half of each ball (24) projects outwardly of the cage (26) to facilitate recirculation of the balls (24).

5. A ballscrew (10)according to claim 1, **characterised in that** a spring (70) is secured between the ball cage (26) and the screw shaft (18), to urge the ball cage (26) into a normal position.

6. A ballscrew (10) according to claim 1, **characterised** **in that** a spring (70) is secured between the ball cage (26) and the ball nut (12), to urge the ball cage (26) into a normal position.
